# EUROPÄISCHE PATENTANMELDUNG

(11) **EP 1 903 173 A2**
(43) Veröffentlichungstag der Anmeldung: **26.03.2008**
(21) Anmeldenummer: 07405197.0
(22) Anmeldetag: 10.07.2007
(51) Int. Cl.: E06B 9/24, E04F 10/06

(54) **Beschattungseinrichtung für ein lichtdurchlässiges Flächenelement**

(30) Priorität: 05.09.2006 CH 14172006
(71) Anmelder: Fehr, Walter, 4800 Zofingen (CH)
(72) Erfinder: Fehr, Walter, 4800 Zofingen (CH)
(74) Vertreter: Rüfenacht, Philipp Michael

(57) **Zusammenfassung**

Bei einem Verfahren zum Herstellen und Anbringen einer Beschattungseinrichtung an einem lichtdurchlässigen Flächenelement wird zunächst ein erstes Bauelement (130.1...130.4) am Flächenelement angebracht, wobei das erste Bauelement (130.1...130.4) mindestens einen ersten Messpunkt (134.1...134.4) definiert. Daraufhin wird ein zweites Bauelement (130.1...130.4) am Flächenelement angebracht, wobei das zweite Bauelement (130.1 ... 130.4) mindestens einen zweiten Messpunkt (134.1...134.4) definiert. Nun werden Distanzen (a...f) zwischen dem mindestens einen ersten Messpunkt und dem mindestens einen zweiten Messpunkt (134.1...134.4) ausgemessen, worauf eine Beschattungsplane (140) und gegebenenfalls mechanische Elemente der Beschattungseinrichtung in Abhängigkeit von den ausgemessenen Distanzen (a...f) hergestellt werden können. Schliesslich wird die Beschattungseinrichtung am Flächenelement angebracht. Weil jedes zu beschattende Flächenelement einzeln ausgemessen wird, kann die Beschattungseinrichtung spezifisch an jedes Objekt angepasst werden. Dies ermöglicht eine optimale Beschattung auch bei komplexen Geometrien. Das Ausmessen ist gegenüber dem Stand der Technik wesentlich vereinfacht, weil die zu verwendenden Messpunkte direkt an den angebrachten Bauelementen ausgebildet sind.

## Beschreibung

### Technisches Gebiet

Die Erfindung betrifft eine Beschattungseinrichtung sowie ein Verfahren zum Herstellen und Anbringen der Beschattungseinrichtung an einem lichtdurchlässigen Flächenelement und einen Hilfsmittelsatz zur Anwendung in diesem Verfahren. Die Erfindung betrifft weiter eine flexible, aufrollbare Beschattungsplane zum Beschatten eines lichtdurchlässigen Flächenelements, ein Verfahren zum Anbringen einer Beschattungseinrichtung an einem um eine Schwenkachse schwenkbaren, lichtdurchlässigen Flächenelement und eine entsprechende Anordnung. Im Weiteren betrifft die Erfindung eine Verbindungsanordnung zum Verbinden eines ersten Bauteils mit einem zweiten Bauteil, insbesondere eines Halteprofils mit einem Abdeckgehäuse für eine Aufrolleinrichtung einer Beschattungseinrichtung, sowie eine Aufrolleinrichtung für eine Beschattungseinrichtung.

### Stand der Technik

Beschattungseinrichtungen für lichtdurchlässige Flächenelemente, insbesondere für Glaselemente von Wintergärten, sind bekannt. Derartige Einrichtungen umfassen zumeist flexible, aufrollbare Beschattungsplanen, welche auf einer am Flächenelement angeordneten Welle aufgenommen sind und in einer Ebene parallel zum Flächenelement abgerollt werden können, so dass sie das Flächenelement abdecken und somit einen durch das Flächenelement abgeschlossenen Innenraum beschatten. Grundsätzlich kann die Beschattungseinrichtung auf der Aussenseite des Flächenelements oder auch auf dessen Innenseite angeordnet sein. Eine aussenseitige Anordnung ist in der Regel bevorzugt, weil sie bereits das Flächenelement, insbesondere eine Verglasung, beschattet und somit ein Aufheizen des Innenraums wirksamer verhindert als eine Anordnung auf der Innenseite.

Weil Wintergärten in der Regel Teile von Gebäuden bilden, soll deren Form und Grösse aus architektonischen und ästhetischen Gründen dem jeweiligen Gebäude angepasst sein. Wintergärten und deren Flächenelemente können somit verschiedenste Formen aufweisen; die Flächenelemente können beispielsweise rechteckig, dreieckig oder trapezförmig sein und unterschiedlichste Dimensionen aufweisen. Ein Wintergarten umfasst in der Regel eine Mehrzahl von Flächenelementen, die sich hinsichtlich ihrer Form und Grösse voneinander unterscheiden.

Aus diesen Gründen ist das Einsatzgebiet von standardisierten Beschattungseinrichtungen, welche vorgegebene Formen (z. B. rechteckig) und Dimensionen haben, sehr eingeschränkt. Um eine optimale Beschattung erreichen zu können, ist es oftmals notwendig, die Elemente einer Beschattungseinrichtung, insbesondere die benötigten Beschattungsplanen sowie die mechanischen Elemente zum Halten und Bewegen dieser Planen, spezifisch an die Flächenelemente des jeweiligen Wintergartens anzupassen.

Die EP 1 389 418 A1 (Boac AG) zeigt beispielsweise eine flexible Beschattungseinrichtung, mit welcher auch nicht rechteckförmige Flächenelemente von Wintergärten abgedeckt werden können. Die die Flächenelemente abdeckenden Beschattungsplanen können in einfacher und optimaler Weise gespannt werden. Dazu umfasst die Einrichtung eine an Tragteilen für Flächenelemente drehbar gelagerte und antreibbare Welle. Auf dieser sind die Beschattungsplanen aufwickelbar und abwickelbar. Diese Planen werden mittels Zugelementen, die über die Welle antreibbar sind, über die abzudeckenden Flächenelemente gespannt. Für jede Plane ist ein Zugelement vorgesehen, das aus mindestens einer Schlaufe gebildet ist, welche über erste Umlenkmittel, die am abwickelseitigen Ende der Plane angebracht sind, über zweite Umlenkmittel, die an Haltemitteln angebracht sind, die ihrerseits an den Tragteilen befestigt sind, geführt sind.

Wenn spezifisch angepasste Beschattungsplanen und gegebenenfalls auch mechanische Teile wie Wellen, Führungen, Halterungen etc. anzufertigen sind, treten verschiedene Probleme auf:
- Das Ausmessen der Dimensionen des zu beschattenden Flächenelements und die Bestimmung der entsprechenden Dimensionen der Beschattungsplane und weiterer Bauelemente des Beschattungssystems ist oftmals kompliziert, besonders dann, wenn das zu beschattende Flächenelement nicht rechteckig, sondern z. B. dreieckig oder trapezförmig ist. Entsprechend oft passieren beim Ausmessen oder den nachfolgenden Umrechnungsschritten Fehler. Diese werden zumeist erst dann entdeckt, wenn die spezifisch hergestellte Beschattungseinrichtung am Flächenelement montiert werden soll. Oft ist es dann notwendig, erneut Messungen durchzuführen und Elemente neu zu fertigen. Dies hat massive Zusatzkosten sowie einen erhöhten Zeitbedarf für den gesamten Montageprozess zur Folge.
- Bei herkömmlichen Verfahren werden gewisse Annahmen über die Geometrie üblicher Flächenelemente getroffen, z. B. was die Breite von Rahmenelementen oder den Neigungswinkel des Flächenelements betrifft. Speziell konstruierte Wintergärten mit Flächenelementen, die sich in dieser Hinsicht von geläufigeren Elementen unterscheiden, können somit mit den gängigen Verfahren nur mit Mühe mit einer optimal wirkenden Beschattungseinrichtung versehen werden. Oftmals stellt man erst nach der Fertigstellung fest, dass Lücken vorhanden sind, durch welche das Aussenlicht direkt in den Innenraum gelangt.
- Bei herkömmlichen Verfahren ist es zwingend, dass die Montageelemente für die Beschattungseinrichtung sehr präzise an vorbestimmten Positionen am Flächenelement angebracht werden. Ansonsten passen die spezifisch gefertigten Elemente nicht oder können nicht in der gewünschten Weise zusammenwirken. Der Montageprozess ist somit aufwendig und bedarf speziell geschulter Fachpersonen.

Bei Beschattungsplanen mit einer wechselnden Breite, wie sie beispielsweise bei trapez- oder dreieckförmigen Flächenelementen benötigt werden, stellt sich oft das Problem, dass Randbereiche der Plane nicht optimal gespannt sind und somit die Plane nicht im Wesentlichen in einer Ebene liegt. Es ist im Prinzip möglich, dieses Problem durch die Anbringung von seitlichen Führungen für die seitlichen Ränder der Beschattungsplane zu lösen, diese seitlichen Führungen sind jedoch auch bei aufgewickelter Beschattungsplane von innen und/oder von aussen sichtbar, sind somit ästhetisch nachteilig und können - besonders bei kleineren Flächenelementen - die nutzbare Lichtöffnung erheblich verkleinern.

Die oben erwähnte EP 1 389 418 A1 (Boac AG) offenbart eine andere Lösung für dreieck- oder trapezförmige Planen, die ohne seitliche Führungen auskommt. Bei grossen Winkeln zwischen Aufrollrichtung und seitlicher Kante, welche beispielsweise grösser sind als 45°, stösst aber auch dieses System an seine Grenzen.

Viele Wintergärten weisen sowohl fest angebrachte Flächenelemente auf, als auch solche, die sich öffnen lassen. Eine einfache und im Prinzip auch gute Lösung besteht darin, die öffenbaren Flächenelemente um eine Schwenkachse verschwenkbar auszubilden. Besonders bevorzugt ist die Schwenkachse an einem Ende des Flächenelements angeordnet, während sich das gegenüberliegende Ende auf die Aussenseite der Dach- oder Wandfläche verschwenken lässt. So kann auch bei leichtem Regenfall das Eindringen von Regenwasser in den Wintergarten weitgehend verhindert werden. Derartige schwenkbare Flächenelemente stellen bei der Beschattung gewisse Probleme, insbesondere dann, wenn sie auch bei ausgerollten Beschattungsplanen öffenbar sein sollen. Gängige Lösungen bestehen entweder darin, die Beschattungseinrichtung auf der Innenseite anzuordnen, was wie oben erläutert aber eigentlich nicht wünschenswert ist, oder aber darin, die Beschattungseinrichtung aussenseitig abgesetzt (quasi "auf Stelzen") zu montieren. Die zweitgenannte Lösung ist aber ästhetisch zumeist unbefriedigend.

In diesem Zusammenhang schlägt die DE 101 49 451 A1 (Weinor Dieter Weitermann GmbH & Co.) gar vor, die Beschattungseinrichtung derart auszubilden, dass diese nur die unbeweglichen Flächenelemente überdeckt, nicht aber diejenigen, die sich öffnen lassen.

Dadurch soll auch bei ausgerollter Beschattungsplane eine ausreichende Belüftung des Innenraums gewährleistet werden. Diese Lösung hat allerdings den Nachteil, dass sich der Wintergarten auch bei sehr sonnigen Verhältnissen und grosser Hitze nicht vollständig beschatten lässt.

Übliche Beschattungseinrichtungen umfassen eine Aufrolleinrichtung mit einer Welle, auf welche die Beschattungsplane aufrollbar ist. Diese Welle, und in aufgerolltem Zustand auch die Plane, sind durch ein Abdeckgehäuse umgeben, durch welches sie von Witterungseinflüssen geschützt sind und welches auch ästhetisch vorteilhaft ist gegenüber einer frei sichtbaren Welle. Für die Montage und für Wartungsarbeiten ist es zweckmässig, wenn das Abdeckgehäuse entfernbar ist. Es sind Lösungen bekannt, bei welchen die Welle der Aufrolleinrichtung sowie das Gehäuse an einem gemeinsamen Halteelement angeordnet sind. Das Gehäuse ist mit diesem an seinen Längsseiten verschraubt und lässt sich nach dem Lösen der entsprechenden Schrauben vom Halteelement entfernen. Allerdings sind diese Schrauben oft schwer erreichbar, insbesondere dann, wenn sich in Längsrichtung an die Aufrolleinrichtung eine weitere Aufrolleinrichtung anschliesst.

Insbesondere bei aussen angeordneten Beschattungseinrichtungen treten feste Verschmutzungen, z. B. in der Form von Blättern oder Zweigen etc., auf, welche sich primär auf der oberen bzw. äusseren Oberfläche der Beschattungsplane ansammeln. Wird die Plane eingerollt, gelangen diese Verschmutzungen auch auf die - in ausgerolltem Zustand von der Gebäudeinnenseite her gut sichtbare - innere Oberfläche der Plane. Durch die Presskraft zwischen den aufeinander folgenden Lagen der aufgewickelten Plane werden die Verschmutzungen in das Planenmaterial gedrückt und sind anschliessend kaum mehr entfernbar.

### Darstellung der Erfindung

Aufgabe der Erfindung ist es, eine dem eingangs genannten technischen Gebiet zugehörende Beschattungseinrichtung sowie ein Verfahren zum Herstellen und Anbringen einer solchen Beschattungseinrichtung zu schaffen, welche oben genannte Nachteile vermeiden.

Die Lösung der Aufgabe ist unter anderem durch die Merkmale des Anspruchs 1 definiert. Gemäss der Erfindung umfasst ein Verfahren zum Herstellen und Anbringen einer Beschattungseinrichtung an einem lichtdurchlässigen Flächenelement folgende Schritte in dieser Reihenfolge:
b) Ein erstes Bauelement wird am Flächenelement angebracht, wobei das erste Bauelement mindestens einen ersten Messpunkt definiert.
c) Ein zweites Bauelement wird am Flächenelement angebracht, wobei das zweite Bauelement mindestens einen zweiten Messpunkt definiert;
d) Zwischen dem mindestens einen ersten Messpunkt und dem mindestens einen zweiten Messpunkt werden Distanzen ausgemessen.
e) Eine Beschattungsplane und gegebenenfalls mechanische Elemente der Beschattungseinrichtung werden in Abhängigkeit von den ausgemessenen Distanzen hergestellt.
f) Schliesslich wird die Beschattungseinrichtung am Flächenelement angebracht.

Eine Beschattungseinrichtung umfasst beispielsweise eine Beschattungsplane, eine Welle, auf welche die Beschattungsplane aufwickelbar ist, sowie ein an einem der Welle gegenüberliegenden Ende der Beschattungseinrichtung angeordnetes Gegenstück zum Spannen der Beschattungsplane. Das erfindungsgemässe Verfahren eignet sich in bevorzugter Weise für das Ausmessen und Herstellen von Beschattungseinrichtungen gemäss der oben erwähnten EP 1 389 418 A1 (Boac AG). Die entsprechende Konstruktion ermöglicht eine flexible Anpassung an eine Vielzahl von Formen und Dimensionen des zu beschattenden Flächenelements. Durch den Einsatz des erfindungsgemässen Verfahrens wird sichergestellt, dass die Einrichtung auf schnelle und einfache Weise optimal angepasst und montiert werden kann.

Beim zu beschattenden Flächenelement kann es sich insbesondere um ein Glaselement eines Wintergartens handeln. Dieses kann Teil eines Dachs bilden und horizontal oder leicht schräg ausgerichtet sein oder aber Teil einer Wand und im Wesentlichen vertikal stehen. Die Beschattungseinrichtung kann sowohl auf der Innen- als auch auf der Aussenseite des Wintergartens montiert werden.

Weil jedes zu beschattende Flächenelement einzeln ausgemessen wird, kann die Beschattungseinrichtung spezifisch an jedes Objekt angepasst werden. Dies ermöglicht eine optimale Beschattung auch bei komplexen Geometrien. Das erfindungsgemässe Verfahren ist unabhängig von der Form und Grösse der zu beschattenden Flächenelemente einsetzbar. Grundsätzlich kann die Beschattungseinrichtung sowohl auf der Innen- als auch auf der Aussenseite des Flächenelements angeordnet werden, wobei eine Anordnung auf der Aussenseite in der Regel zu bevorzugen ist.

Das Ausmessen ist gegenüber dem Stand der Technik wesentlich vereinfacht, weil die zu verwendenden Messpunkte direkt an den angebrachten Bauelementen ausgebildet sind. Weil die Positionen der Messpunkte zudem in Abhängigkeit vom tatsächlichen Flächenelement fix vorgegeben sind, lassen sich nach dem Ausmessen auf einfache Weise die Dimensionen der herzustellenden oder anzupassenden Teile bestimmen, beispielsweise mittels eines einfachen Computerprogramms. Durch den einfachen und klar vorgebbaren Ablauf des erfindungsgemässen Verfahrens wird die Häufigkeit von Fehlern wesentlich vermindert.

Bereits beim Anbringen der Bauelemente am Flächenelement können Korrekturen und Anpassungen vorgenommen werden, beispielsweise hinsichtlich einer optimierten Führung einer Beschattungsplane. Die Geometrie der zukünftigen Beschattungseinrichtung wird anhand der Bauelemente gleichsam direkt am Objekt modelliert.

Mit Vorteil werden vor dem Anbringen der Bauelemente am Flächenelement bereits Befestigungspunkte zum Anbringen der Beschattungseinrichtung definitiv erstellt. In der Folge werden zunächst die Bauelemente an diesen definitiven Befestigungspunkten angebracht, und schliesslich wird auch die hergestellte Beschattungseinrichtung an diesen definitiven Befestigungspunkten angebracht.

Die zu Beginn des Verfahrens hergestellten definitiven Befestigungspunkte werden also zur schliesslichen Befestigung der Beschattungseinrichtung genutzt. Für das Anbringen der für das Ausmessen benötigten Bauelemente und der Montageelemente der Beschattungseinrichtung werden somit dieselben Befestigungspunkte genutzt. Die Befestigungspunkte können beispielsweise durch Bohrungen in einer Umrandung des Flächenelements gebildet sein.

Weil die Montageelemente für die Beschattungseinrichtung an denjenigen definitiven Befestigungspunkten angebracht werden, welche auch für das Ausmessen verwendet wurden, liefert die Messung äusserst präzise Resultate. Die genaue Position der Befestigungspunkte ist zudem im Gegensatz zu den Lösungen im Stand der Technik unkritisch, weil diese Position bereits in die Ausmessung und die Bestimmung der Dimensionen der Beschattungsplane und gegebenenfalls weiterer mechanischer Teile der Beschattungseinrichtung einfliesst.

Als Alternative zu den definitiven Befestigungspunkten können die Bauelemente zum Ausmessen auch auf andere Weise am Flächenelement angebracht, z. B. festgeklemmt, werden.

Beim ersten und/oder zweiten Bauelement kann es sich um eine Lehre handeln, wobei der mindestens eine erste und/oder zweite Messpunkt an dieser Lehre ausgebildet ist. Der Messpunkt wird beispielsweise durch eine optische Markierung, eine Haltevorrichtung für ein Ende eines Massbands oder einen Anschlag gebildet. Die Lehre wird mit Vorteil auf dieselbe Weise am Flächenelement befestigt wie später die Montageelemente der Beschattungseinrichtung, also bevorzugt bereits an den definitiven Befestigungspunkten. Die Lehre kann derart ausgebildet sein, dass bereits anhand der befestigten Lehre und gegebenenfalls eines angelegten Massbands oder anderer Hilfsmittel die Positionierung von Montageelementen oder der Verlauf der Beschattungsplane unmittelbar erkennbar ist.

Das erste und/oder das zweite Bauelement kann auch durch eine Befestigungskonsole der Beschattungseinrichtung gebildet sein, wobei der mindestens eine erste und/oder zweite Messpunkt an dieser Befestigungskonsole ausgebildet ist. Falls die definitiven Befestigungspunkte zu Beginn hergestellt werden, kann die Konsole somit bereits vor dem Ausmessen fest am Flächenelement angebracht werden und verbleibt nach dem Ausmessen am Flächenelement. Nach ihrer Herstellung können die weiteren Elemente der Beschattungseinrichtung an den bereits angebrachten Konsolen befestigt werden. Weil die Befestigungskonsolen bereits zu Beginn am Flächenelement angebracht werden und nicht mehr entfernt werden, können in diesem Fall die definitiven Befestigungspunkte auch beispielsweise durch Schweissverbindungen oder andere dauerhafte Verbindungsmittel gebildet sein. Die an der Konsole angebrachten Messpunkte können auch hier als optische Markierungen, Haltevorrichtungen für ein Ende eines Massbands oder als Anschläge ausgebildet sein. Neben der Funktion als Messpunkt kann das entsprechende Element auch noch eine weitere, insbesondere mechanische, Funktion als Teil der Befestigungskonsole haben.

An den Befestigungskonsolen können auch Lehren angebracht werden, wobei der mindestens eine erste und/oder zweite Messpunkt an dieser Lehre ausgebildet ist. Die verschiedenen Varianten (direkt am Befestigungspunkt angeordnete Lehre, Konsole mit Messpunkt, Lehre an Konsole) können in demselben Verfahren und für dieselbe Beschattungseinrichtung kombiniert werden, d. h. gewisse Befestigungspunkte werden direkt mit einer Konsole versehen, andere dienen zunächst zur Befestigung einer Lehre, und es werden unter Umständen Distanzen zwischen einem Messpunkt auf einer später wieder zu entfernenden Lehre und einem Messpunkt auf einer bereits definitiv angebrachten Konsole gemessen. Neben den auf den Bauelementen ausgebildeten Messpunkten können weitere Messpunkte vorgesehen sein, insbesondere können die definitiven Befestigungspunkte selber auch (weitere) Messpunkte darstellen.

Eine Lehre kann eine gerade Stange umfassen, welche zur Anbringung am Flächenelement entlang ihrer Längsausdehnung an zwei voneinander distanzierten Befestigungspunkten befestigt wird. Die Stange kann beispielsweise einer Querseite (senkrecht zur Aufrollrichtung) der Beschattungsplane entsprechen oder zu einer solchen parallel sein und das parallele Ausrichten dieser Seite auf die Umrandung des Flächenelements vereinfachen. Die Stange verläuft beispielsweise zwischen zwei Befestigungskonsolen und dient dazu, diese bereits vor dem Ausmessen und vor der Herstellung der Beschattungsplane für die spätere Aufnahme der Montageelemente der Beschattungseinrichtung definitiv auszurichten.

Anstelle einer Stange kann auch eine seilartige Lehre verwendet werden, zumal dann, wenn nur die Position der die Stange haltenden Elemente zu justieren ist, nicht aber deren Orientierung. Neben einer solchen Lehre können weitere Lehren vorgesehen sein, welche nur an einem Befestigungspunkt oder mehreren unmittelbaren Befestigungspunkten angebracht sind.

Mit Vorteil wird mindestens eine zusätzliche Distanz zwischen den vorhandenen Messpunkten ausgemessen, welche die Geometrie der herzustellenden Beschattungsplanen und/oder mechanischen Elemente überbestimmt, d. h. es wird mindestens ein Wert mehr ermittelt als zur Bestimmung der Geometrie der herzustellenden Elemente notwendig ist. Die zusätzliche auszumessende Distanz wird so gewählt, dass mit ihrer Hilfe eine Kontrolle auf Fehler der Ausmessung vorgenommen werden kann. So können Unregelmässigkeiten frühzeitig, insbesondere bereits vor der Anpassung oder Herstellung von Elementen der Beschattungseinrichtung, erkannt werden. Die Prüfung der ermittelten Werte kann beispielsweise durch das bereits erwähnte Computerprogramm vorgenommen werden, welches aus den gemessenen Distanzen die Dimensionen der Beschattungsplane bzw. der mechanischen Elemente der Beschattungseinrichtung bestimmt.

Für die Herstellung und Anbringung der Beschattungseinrichtung an einem lichtdurchlässigen Flächenelement gemäss dem vorstehend beschriebenen Verfahren wird mit Vorteil ein Hilfsmittelsatz eingesetzt. Dieser umfasst mindestens zwei Bauelemente zur Anbringung am Flächenelement, bevorzugt an am Flächenelement ausgebildeten definitiven Befestigungspunkten. Jedes der Bauelemente definiert mindestens einen Messpunkt für eine Dimensionierung einer Beschattungsplane und gegebenenfalls mechanischer Elemente der Beschattungseinrichtung. Zum Hilfsmittelsatz zählen insbesondere die zu verwendenden Lehren, gegebenenfalls auch ein Massband, welches mit den Messpunkten spezifisch zusammenwirken kann und eine besonders präzise Messung ermöglicht, sowie Bohrlehren, welche die Herstellung von Bohrungen als definitive Befestigungspunkte erleichtern.

Bei Beschattungsplanen mit einer wechselnden Breite, wie sie beispielsweise bei trapez- oder dreieckförmigen Flächenelementen benötigt werden, stellt sich oft das Problem, dass Randbereiche der Plane nicht optimal gespannt sind und somit die Plane nicht im Wesentlichen in einer Ebene liegt. Es ist im Prinzip möglich, dieses Problem durch die Anbringung von seitlichen Führungen für die seitlichen Ränder der Beschattungsplane zu lösen, diese seitlichen Führungen sind jedoch auch bei aufgewickelter Beschattungsplane sichtbar, sind somit ästhetisch nachteilig und können - besonders bei kleineren Flächenelementen - die nutzbare Lichtöffnung erheblich verkleinern.

Die oben erwähnte EP 1 389 418 A1 (Boac AG) offenbart eine andere Lösung für dreieck- oder trapezförmige Planen, die ohne seitliche Führungen auskommt. Bei grossen Winkeln zwischen Aufrollrichtung und seitlicher Kante, welche beispielsweise grösser sind als 45°, stösst aber auch dieses System an seine Grenzen.

Eine flexible, aufrollbare Beschattungsplane zum Beschatten eines lichtdurchlässigen Flächenelements, wobei die Beschattungsplane entlang einer Aufrollrichtung eine wechselnde Breite aufweist, ist somit mit Vorteil im Bereich mindestens einer Längsseite mit einer flächigen Verstärkung versehen. Die Längsseiten sind diejenigen Kanten der Beschattungsplane, welche diese in einer Richtung quer zur Aufrollrichtung seitlich begrenzen. Die maximale Breite der Verstärkung beträgt mit Vorteil nicht mehr als ca. 1/10 der Gesamtbreite der Beschattungsplane. Es hat sich gezeigt, dass mittels der Verstärkung auch nicht-rechteckige, insbesondere trapez- oder dreieckförmige Beschattungsplanen derart ausgebildet werden können, dass sie in Randbereichen nicht durchhängen. Im Rahmen der Beschattungseinrichtung, wie sie in der EP 1 389 418 A1 (Boac AG) offenbart ist, ermöglicht eine derartige Ausbildung der Beschattungsplane Winkel zwischen Aufrollrichtung und seitlicher Kante von bis zu 60°.

Die flächige Verstärkung ist bevorzugt durch eine Aufdoppelung gebildet, d. h. im Bereich mindestens einer Längsseite sind mindestens doppelt so viele Lagen des flächigen Planenmaterials vorhanden wie in anderen Bereichen der Plane. Die Aufdoppelung wird am einfachsten durch einen nach innen geschlagenen und festgenähten, -geklebten oder geschweissten Materialbereich gebildet, kann aber auch durch einen zusätzlichen Materialstreifen realisiert werden.

Im Fall einer Beschattungsplane, deren Breite in Aufrollrichtung zunimmt, beispielsweise einer entsprechenden dreieckigen oder trapezförmigen Plane, ist die flächige Verstärkung mit Vorteil keilförmig, wobei eine Breite der Verstärkung ebenfalls in Aufrollrichtung zunimmt. Es hat sich gezeigt, dass durch diese Geometrie das gewünschte Verhalten des Stoffs bestmöglich erreicht werden kann.

Die Beschattungsplane ist vorzugsweise derart ausgebildet, dass ein Bereich der flächigen Verstärkung auch bei maximal abgewickelter Beschattungsplane noch an der Welle zum Aufwickeln der Plane anliegt, d. h. im maximal abgewickelten Zustand, in welchem die Plane das gesamte Flächenelement abdeckt, verbleibt ein Teil der Plane auf der Rolle. Die Verstärkung ist derart ausgebildet, dass sie sich auch auf diesen Teil erstreckt und sich somit auf der Welle abstützen kann.

Um ein Durchhängen der seitlichen Längskanten einer Beschattungsplane zu verhindern, kann eine Beschattungseinrichtung alternativ oder zusätzlich zu den Verstärkungen mit einem distanziert vor der Welle angeordneten Stützelement zum lokalen Unterstützen der Beschattungsplane in einem Bereich ihrer Längskante versehen werden. Das Stützelement ist mit Vorteil nahe bei der Welle angeordnet (insbesondere im ersten Viertel der Länge der ausgerollten Beschattungsplane) und derart ausgebildet, dass seine die Unterseite der Beschattungsplane kontaktierende Stützfläche höher liegt als die Stützfläche der Welle.

Eine Beschattungseinrichtung mit einer Beschattungsplane, einer Welle, auf welche die Beschattungsplane aufwickelbar ist, sowie einem an einem der Welle gegenüberliegenden Ende der Beschattungseinrichtung angeordneten Gegenstück zum Spannen der Beschattungsplane wird mit Vorteil an einem um eine Schwenkachse schwenkbaren, lichtdurchlässigen Flächenelement, insbesondere eines Wintergartens, mit einer der Schwenkachse gegenüberliegenden freien Seite, angebracht, indem die Welle oder das Gegenstück an der freien Seite des schwenkbaren Flächenelements befestigt wird.

Das entsprechende Element bewegt sich somit zusammen mit dem schwenkbaren Flächenelement; weder wird durch die Beschattungsplane die Luftzirkulation behindert, noch ist es notwendig, die Beschattungsplane bei nach aussen öffenbaren Schwenkelementen auf der Innenseite der Wand- oder Dachfläche anzubringen oder die Beschattungseinrichtung von der Wand- bzw. Dachfläche abzusetzen.

Mit Vorteil wird zum Beschatten des schwenkbaren Flächenelements wiederum eine Beschattungseinrichtung eingesetzt, welche ein seilartiges Zugelement umfasst, durch welches die Beschattungsplane spannbar ist, und bei welcher das Gegenstück durch eine Umlenkung für das Zugelement gebildet wird. Zwischen der Welle und dem Zugelement ist ein Spannmechanismus ausgebildet, durch welchen eine Spannung der Beschattungsplane auch bei Abstandsänderungen zwischen der Welle und der Umlenkung aufrechterhalten wird. Eine entsprechende Beschattungseinrichtung ist beispielsweise aus der EP 1 389 418 A1 (Boac AG) bekannt.

Mit einer derartigen Einrichtung ist es möglich, die Welle oder die Umlenkung an der freien Seite des schwenkbaren Flächenelements zu befestigen, während das gegenüberliegende Element der Beschattungseinrichtung, also die Umlenkung oder die Welle, an einem weiteren Element einer das schwenkbare, lichtdurchlässige Flächenelement umfassenden Fläche befestigt wird, wobei als weiteres Element insbesondere ein unbewegliches Element der Fläche gewählt wird. Die Beschattungseinrichtung kann somit eine Fläche beschatten, die sowohl feste Flächenelemente als auch ein in die Richtung der Beschattungseinrichtung öffenbares Flächenelement umfasst. Durch den Spannmechanismus wird gewährleistet, dass die Abstandsänderungen, die beim Öffnen bzw. Schliessen des schwenkbaren Flächenelements auftreten, automatisch ausgeglichen werden und die Beschattungsplane stets gespannt bleibt.

Die Federkraft des Spannmechanismus kann derart gewählt werden, dass sie einen Teil der Gewichtskraft des schwenkbaren Flächenelements kompensiert und somit das Öffnen des Elements unterstützt.

In einer alternativen Ausführungsform sind die Welle und das Gegenstück an Befestigungspunkten an einem Rahmen befestigt, wobei die Befestigungspunkte einen vorgegebenen festen Abstand aufweisen. Eine erste Seite des Rahmens () ist dabei an der freien Seite des schwenkbaren Flächenelements befestigt. Diese erste Seite und/oder eine der ersten Seite gegenüberliegende zweite Seite des Rahmens ist in einer Richtung senkrecht zur Schwenkachse beweglich gelagert.

Diese bewegliche Lagerung ermöglicht eine Anpassung der Befestigungspunkte des Rahmens an Distanzänderungen, welche sich durch das Schwenken des Flächenelements ergeben. Bewegliche Lagerungen sind an sich bekannt, sie können z. B. durch Nutführungen realisiert werden. Neben der Beweglichkeit in einer Richtung senkrecht zur Schwenkachse ist in der Regel auch eine Schwenkmöglichkeit des Rahmens vorzusehen, damit die Schwenkbewegung des Flächenelements nicht behindert wird. Im Weiteren ist es möglich, eine Feder vorzusehen, welche sicherstellt, dass der Rahmen in Abhängigkeit der Schwenkstellung des Flächenelements eine vorgegebene Position einnimmt. Dies kann aber bei entsprechender Auslegung auch durch die Einwirkung der Schwerkraft auf den Rahmen realisiert werden.

Zum lösbaren Anbringen eines Abdeckgehäuses (erstes Bauteil) für eine Aufrolleinrichtung einer Beschattungseinrichtung an einem Halteprofil (zweites Bauteil) werden die Bauteile mit Vorteil derart verbunden, dass in einem Verbindungsbereich Hauptflächen des ersten Bauteils und des zweiten Bauteils zueinander parallel sind. Bei der entsprechenden Verbindungsanordnung
a) ist im ersten Bauteil im Verbindungsbereich eine Nut ausgebildet, wobei eine Öffnungsebene der Nut im Wesentlichen senkrecht steht zur Hauptfläche des ersten Bauteils;
b) ist im zweiten Bauteil im Verbindungsbereich eine Feder derart ausgebildet, dass bei parallelen Hauptflächen des ersten Bauteils und des zweiten Bauteils die Feder in einer Einführrichtung parallel zu den Hauptflächen in die Nut einführbar ist;
c) ist im ersten Bauteil im Verbindungsbereich eine erste Erhebung ausgebildet; und
d) ist im zweiten Bauteil im Verbindungsbereich eine zweite Erhebung ausgebildet, wobei die Erhebungen parallel zur Nut bzw. zur Feder verlaufen und wobei die Erhebungen derart angeordnet sind, dass beim Einführen der Feder in die Nut die zweite Erhebung über die erste Erhebung bewegt wird;

Das erste Bauteil und das zweite Bauteil sind im Verbindungsbereich derart ausgebildet, dass bei in die Nut eingeführter Feder Klemmabschnitte der beiden Bauteile gegeneinander verspannt sind, wobei die Klemmabschnitte parallel sind zur Nut bzw. Feder und den Erhebungen bezüglich der Nut bzw. der Feder gegenüberliegen. Eine derartige Verbindung kommt ohne Schrauben aus und lässt sich auf einfache Weise herstellen und durch eine gezielte Krafteinwirkung wieder lösen.

Wenn die Bauteile - wie Elemente eines Abdeckgehäuses für eine Aufrolleinrichtung einer Beschattungseinrichtung - eine längliche Form haben, erstrecken sich die Nut, die Feder, die Erhebungen sowie die Klemmabschnitte mit Vorteil in Längsrichtung, und die Klemmabschnitte werden durch in Längsrichtung voneinander distanzierte Bereiche eines der Bauteile gebildet. Durch die Wahl der Anzahl und der gegenseitigen Abstände dieser Bereiche kann die notwendige Kraft zum Zusammenfügen und Lösen der Verbindung nach Wunsch bestimmt werden.

Mit Vorteil sind die Klemmabschnitte durch Federelemente gebildet, welche mittels einer Schnappverbindung an einem der Bauteile befestigbar sind. Dies ermöglicht die Verwendung handelsüblicher Profile. Die Klemmabschnitte können zudem auf einfache Weise aus einem anderen Material hergestellt werden als die miteinander zu verbindenden Elemente. Dies ist besonders dann von Vorteil, wenn die zu verbindenden Elemente aus einem weichen Material, z. B. aus Aluminium, hergestellt sind, weil auf diese Weise ein gegenseitiges Festfressen der aus dem weichen Material hergestellten Elemente verhindert werden kann. Schliesslich können die Federelemente bei geeigneter Ausbildung auch zur Befestigung des mit ihnen verbundenen Bauelements dienen, beispielsweise an einem Tragelement.

Im Rahmen eines Beschattungssystems ist die beschriebene Verbindungsanordnung somit besonders gut zum Verbinden eines Befestigungsprofils aus Aluminium zur Aufnahme der Welle der Beschattungseinrichtung mit einem Abdeckkasten aus Aluminium geeignet. Die Federelemente sind zweckmässigerweise aus Stahl hergestellt.

Bei einer Aufrolleinrichtung für eine Beschattungseinrichtung, insbesondere für eine innenliegende Seite eines lichtdurchlässigen Flächenelements, mit einer Welle, auf welche eine Beschattungsplane aufwickelbar ist, sowie mit einem Gehäuse, in welchem die Welle aufgenommen ist, wobei das Gehäuse eine Öffnung zum Herausführen der Beschattungsplane aufweist, ist im Gehäuse mit Vorteil ein mechanisches Reinigungselement, insbesondere eine Bürste, angeordnet. Das Reinigungselement kontaktiert mindestens eine Oberfläche der Beschattungsplane und ist derart angeordnet, dass die Beschattungsplane beim Aufrollen auf die Welle gereinigt wird. Dadurch können feste Verschmutzungen wie Blätter, Zweige etc. bereits von der Oberfläche entfernt werden, bevor sie das erste Mal gemeinsam mit der Plane eingerollt werden. Dadurch wird verhindert, dass die Verschmutzungen beim Aufrollen in das Material eingedrückt werden und auch auf die andere, oft von der Innenseite des zu beschattenden Gebäudeteils direkt sichtbaren, Oberfläche der Beschattungsplane gelangen.

Mit Vorteil ist das Reinigungselement derart angeordnet, dass von der Oberfläche der Beschattungsplane entfernter Schmutz im Gehäuse verbleibt. So kann verhindert werden, dass die entfernten Verschmutzungen auf den Boden im Gebäudeinnern bzw. - bei aussen angebrachten Beschattungseinrichtungen - auf das Flächenelement selbst gelangen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Schrägansicht einer Beschattungseinrichtung, welche zur Realisierung der Erfindung geeignet ist;
- Fig. 2: eine schematische Draufsicht auf ein mit einer Beschattungseinrichtung zu versehendes erstes Flächenelement mit angebrachten Befestigungskonsolen und Lehren;
- Fig. 3: eine schematische Darstellung der zuzuschneidenden Beschattungsplane;
- Fig. 4: eine schematische Draufsicht auf ein mit einer Beschattungseinrichtung zu versehendes zweites Flächenelement mit angebrachten Befestigungskonsolen und Lehren;
- Fig. 5: eine Beschattungsplane mit erfindungsgemässen Verstärkungen;
- Fig. 6: eine schematische Schrägansicht eines Gebäudes mit einem schwenkbaren Dachelement und einer erfindungsgemässen Beschattungseinrichtung;
- Fig. 7A, B: eine schematische Seitenansicht eines schwenkbaren Dachelements mit einer weiteren Ausführungsform einer erfindungsgemässen Beschattungseinrichtung;
- Fig. 8A, B: eine erste Ausführungsform einer Aufrolleinrichtung einer erfindungsgemässen Beschattungseinrichtung; und
- Fig.9: eine zweite Ausführungsform einer Aufrolleinrichtung einer erfindungsgemässen Beschattungseinrichtung.

Grundsätzlich sind in den Figuren gleiche Teile mit gleichen Bezugszeichen versehen.

### Wege zur Ausführung der Erfindung

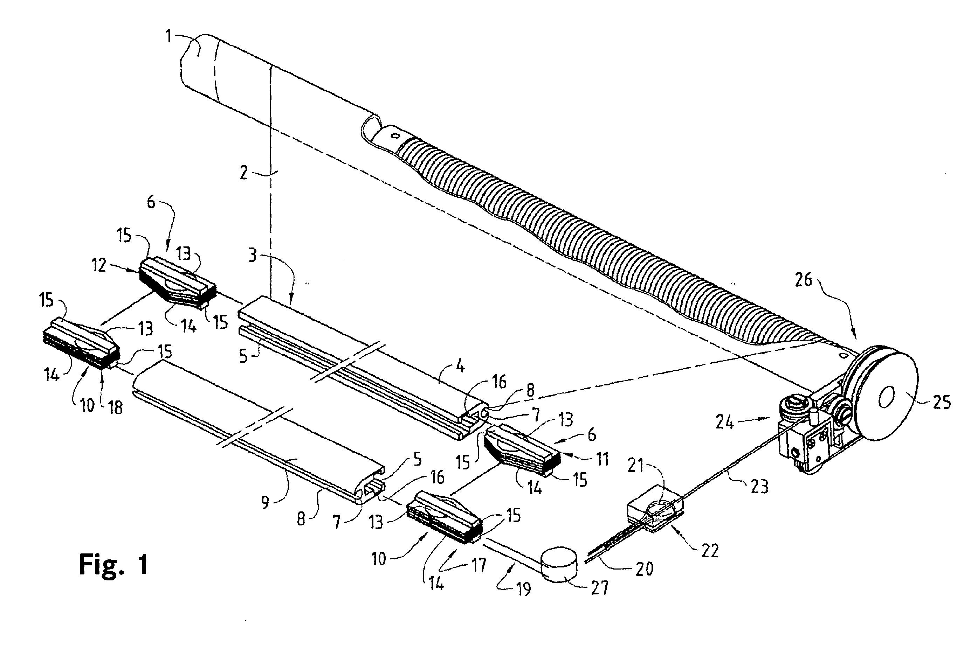

Die Figur 1 ist eine schematische Schrägansicht einer Beschattungseinrichtung, welche zur Realisierung der Erfindung geeignet ist. Diese Beschattungseinrichtung ist bereits aus der EP 1 389 418 A1 bekannt und wird im Folgenden noch einmal kurz beschrieben, insoweit es für das Verständnis der Erfindung notwendig ist.

Die Beschattungseinrichtung umfasst eine drehbar gelagerte und antreibbare Welle 1. Diese Welle 1 ist an nicht dargestellten Tragteilen, die die Flächenelemente beispielsweise eines Wintergartens tragen, in bekannter Weise befestigt. Der Antrieb kann in bekannter Weise von Hand erfolgen, er kann aber auch einen Motor umfassen, der in die Welle integriert oder an diese gekoppelt ist. Auf die Welle 1 aufwickelbar und von dieser abwickelbar ist ein Stoffteil 2, welcher im abgewickelten Zustand eines oder mehrere Flächenelemente abdecken kann und somit eine Beschattungsplane bildet.

Am abwickelseitigen Ende 3 des Stoffteils 2 ist eine erste Profilschiene 4 angebracht. Diese erste Profilschiene 4 erstreckt sich über die Länge des abwickelseitigen Endes 3 des Stoffteils 2, welches im Wesentlichen parallel zur Welle 1 ausgerichtet ist. Diese erste Profilschiene 4 ist mit einer längs verlaufenden Rille 5 ausgestattet, welche auf der Seite der ersten Profilschiene 4 angebracht ist, die dem Stoffteil 2 gegenüberliegend ist. In diese Rille 5 sind erste Umlenkmittel 6 einschiebbar und in einer gewünschten Position in bekannter Weise fixierbar. Die erste Profilschiene 4 ist ferner mit einer Längsnut 7 versehen, die der Rille 5 gegenüberliegend ist, und weist einen kreisförmigen Querschnitt auf mit einem längs verlaufenden Spalt 8, dessen Öffnung in einem der Rille 5 abgewandten Bereich der ersten Profilschiene 4 verläuft. In dieser Längsnut 7 ist der Stoffteil 2 befestigt, indem das abwickelseitige Ende 3 mit einer geschlossenen Schlaufe versehen ist, die in die Längsnut 7 eingelegt ist, und in welche Schlaufe ein Stab eingeführt werden kann.

An den Tragteilen ist eine zweite Profilschiene 9 befestigt, die gleich ausgebildet ist wie die erste Profilschiene 4, und ebenfalls eine Rille 5 und eine Längsnut 7 mit entsprechendem Spalt 8 aufweist. Diese zweite Profilschiene 9 ist so an den Tragteilen befestigt, dass sie der ersten Profilschiene 4 benachbart ist, wenn der Stoffteil2 voll abgewickelt ist. In bekannter Weise ist diese zweite Profilschiene 9 schwenkbar mit den Tragteilen verbunden, indem in die kreisförmige Rille 5 Bolzen eingesetzt sind, die einen Steg aufweisen, der durch den Spalt aus der zweiten Profilschiene 9 herausragt und an den Tragteilen fixiert werden kann. Dadurch kann sich die zweite Profilschiene 9 selbständig bezüglich der ersten Profilschiene 4 bzw. des Stoffteils 2 ausrichten. Die zweite Profilschiene 9 lässt sich durch Verschieben in Längsrichtung bezüglich der Befestigungsmittel auf die erste Profilschiene 4 bzw. den Stoffteil 2 ausrichten. In die Rille 5 der zweiten Profilschiene 9 sind entsprechend der ersten Profilschiene 4 zweite Umlenkmittel 10 eingesetzt.

Die ersten Umlenkmittel 6, die in die erste Profilschiene 4 eingesetzt sind, umfassen eine erste Rollenanordnung 11 und eine zweite Rollenanordnung 12. Beide Rollenanordnungen 11, 12 bestehen aus Rollen 13, die zwischen Plättchen 14 drehbar gehalten sind. Die äusseren Plättchen sind jeweils mit einem Steg 15 versehen, die in Längsausnehmungen 16 passend sind, die in der Rille 5 der ersten Profilschiene 4 angebracht sind.

Die zweiten Umlenkmittel 10 umfassen ebenfalls eine erste Rollenanordnung 17 und eine zweite Rollenanordnung 18. Diese Rollenanordnungen 17 und 18 sind ebenfalls mit Rollen 13 versehen, die in Plättchen 14 gehalten sind. Das oberste und unterste Plättchen weist ebenfalls einen Steg 15 auf, der in Längsausnehmungen 16 der Rille 5 der zweiten Profilschiene 9 passend ist.

Über diese Rollenanordnungen 11, 12, 17, 18 ist ein seilartiger Teil 19 geführt, der eine Schlaufe 20 bildet. Das Ende 21 dieser Schlaufe 20 ist über ein bekanntes Verbindungsmittel 22 mit einem Zugseil 23 verbunden. Das Zugseil 23 wird über eine Leiteinrichtung 24 auf eine Wickelrolle 25 der Wickeleinrichtung 26 geführt.

Die Schlaufe 20 verläuft vom Zugseil 23 her, mit dem sie verbunden ist, über zusätzlich vorgesehene Umlenkrollen 27 zur ersten Rollenanordnung 17 der zweiten Umlenkmittel 10, von dort zur ersten Rollenanordnung 11 der ersten Umlenkmittel 6, danach zur zweiten Rollenanordnung 12 der ersten Umlenkmittel 6, von hier zur zweiten Rollenanordnung 18 der zweiten Umlenkmittel 10 und über die erste Rollenanordnung 17 der zweiten Umlenkmittel 10 über die weiteren Umlenkrollen 27 zurück zum Zugseil 23 bzw. der nicht dargestellten Verbindungsmittel.

Um eine optimale Spannung der Stoffteile in jeder abgewickelten Position erreichen zu können, ist die Wickelrolle 25 der Wickeleinrichtung 26 mit der Welle 1 über eine Spannfeder verbunden, wie dies in der EP 1 389 418 A1 (Boac AG) eingehend beschrieben ist.

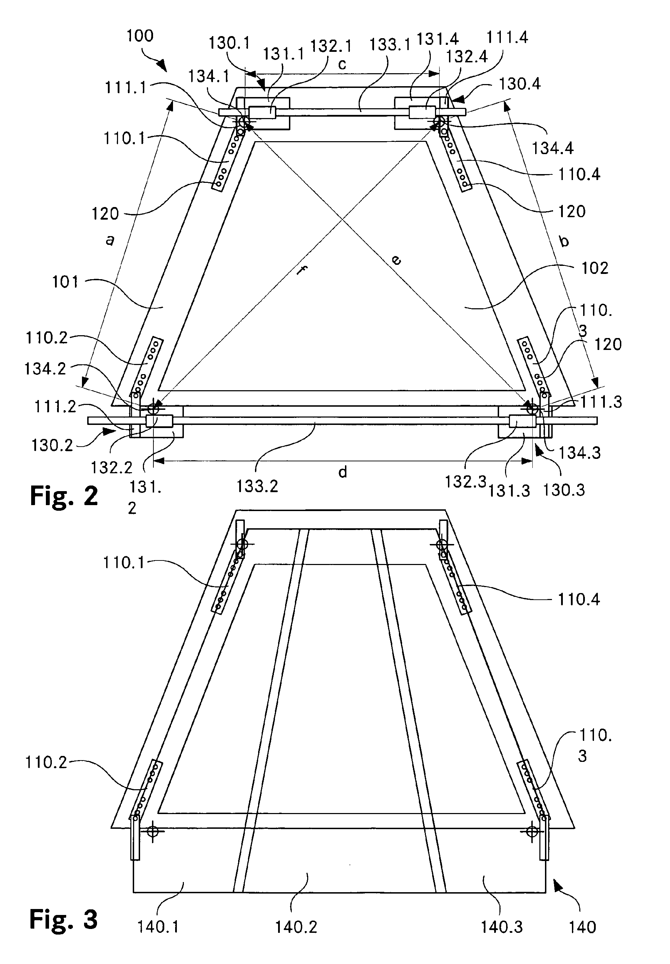

Anhand der Figuren 2-4 ist der erfindungsgemässe Prozess des Ausmessens der Geometrie des zu beschattenden Flächenelements beschrieben. Die Figur 2 zeigt ein Flächenelement 100 eines Wintergartens mit einer trapezförmigen Grundfläche. Das Flächenelement umfasst einen Rahmen 101 aus Aluminiumprofilen sowie eine im Rahmen 101 aufgenommene Glasfüllung 102. Im Rahmen des erfindungsgemässen Verfahrens werden nun als erstes im Rahmen 101 eine Reihe von Befestigungskonsolen 110.1...110.4 befestigt. Dazu werden für jede Befestigungskonsole 110.1...110.4 mehrere Bohrungen 120 im Rahmen 101 erstellt, wonach die mit entsprechenden Durchgangsöffnungen versehenen Befestigungskonsolen 110.1...110.4 mittels Schrauben an diesen Bohrungen 120 befestigt werden können. Mit Vorteil werden Gruppen dreier auf einer Linie nebeneinander liegender Bohrungen 120 hergestellt, wobei die beiden aussenliegenden Bohrungen übliche Schrauben zum Festziehen am Aluminiumprofil des Rahmens 101 aufnehmen. Die mittlere Bohrung dient zur Aufnahme eines Gewindestifts, dessen Aussengewinde mit einem entsprechenden Innengewinde in der Befestigungsöffnung der Befestigungskonsole 110.1...110.4 zusammenwirkt und somit den Aufbau eines Gegendrucks ermöglicht. Auf diese Art und Weise können die Befestigungskonsolen 110.1...1 10.4 sicher am Rahmen 101 gehalten werden und auf sie einwirkende Kräfte können zuverlässig auf den Rahmen 101 1 abgeleitet werden.

Die Befestigungskonsolen 110.1...110.4 umfassen jeweils einen schwenkbaren Teil 111.1...111.4. Dieser ist an einem Längsende der Konsole um eine Achse schwenkbar angebracht, wobei die Achse bei am Rahmen 101 angebrachter Befestigungskonsole 110.1...110.4 senkrecht zur Oberfläche des Rahmens 101 steht. Die Befestigungskonsolen 110.1...110.4 werden in den Eckbereichen des Flächenelements 100 derart angebracht, dass die schwenkbaren Teile 111.1...111.4 ungefähr zu den Ecken des Flächenelements 100 weisen.

An diesen Befestigungskonsolen 110.1...110.4, genauer gesagt an den schwenkbaren Teilen 111.1...111.4, werden nun Lehren 130.1...130.4 temporär befestigt. Diese umfassen eine Grundplatte 131.1...131.4 mit einer Aufnahme 132.1...132.4, in welche eine Stange 133.1, 133.2 mit rundem Querschnitt einschiebbar ist. Eine Stange 133.1 wird in die Aufnahmen 132.1, 132.4 der an der kürzeren der beiden parallelen Seiten des trapezförmigen Flächenelements 100 angeordneten Lehren 130.1, 130.4 eingeschoben und stellt somit sicher, dass die Lehren 130.1, 130.4 parallel zueinander und auf einer Linie positioniert sind. Eine weitere Stange 133.2 wird in die Aufnahmen 132.2, 132.3 der an der kürzeren der beiden parallelen Seiten des trapezförmigen Flächenelements 100 angeordneten Lehren 130.2, 130.3 eingeschoben und stellt somit sicher, dass auch diese Lehren 130.2, 130.3 parallel zueinander und auf einer Linie positioniert sind.

Auf der Grundplatte 131.1...131.4 jeder Lehre 130.1...130.4 ist ein Messpunkt 134.1...134.4 ausgebildet; dieser ist optisch gut sichtbar und gleichzeitig als Einsteckvorrichtung für einen an einem Massband angebrachten Zapfen ausgebildet.

Es werden nun mit Hilfe des genannten Massbands alle Abstände a...f zwischen jeweils zwei Messpunkten ausgemessen. Selbst wenn an die Geometrie des durch die Messpunkte 134.1...134.4 aufgespannten Vierecks keine Bedingungen gestellt werden, ist diese durch die sechs Abstände a...f überbestimmt. Ein Vergleich der gemessenen Distanzen ermöglicht somit eine Kontrolle auf Mess-, Ablese- oder Übertragungsfehler. Nimmt man gewisse Bedingungen an die Geometrie, wie eine ungefähre Parallelität zweier Seiten oder eine ungefähre Achsensymmetrie dazu, ergeben sich zusätzliche Kontrollmöglichkeiten. Die Kontrollen erfolgen mit Vorteil während des Ablaufs eines Computerprogramms, welches aus den gemessenen Abständen a...f die benötigten Dimensionen für die Herstellung und/oder Anpassung der Beschattungsplane und gegebenenfalls der mechanischen Befestigungsteile für die Beschattungseinrichtung bestimmt. Wird ein Fehler entdeckt, fordert das Computerprogramm den Benutzer auf, die Messungen erneut durchzuführen.

In der Figur 3 sind drei zuzuschneidende Planenabschnitte 140.1, 140.2, 140.3, welche die herzustellende Beschattungsplane 140 bilden, schematisch dargestellt. Deren Dimensionen können anhand der gemessenen Abstände a...f eindeutig ermittelt werden, wobei im Rahmen der Bestimmung dieser Dimensionen die Anordnung der Messpunkte auf den Lehren 130.1... 130.4 berücksichtigt wird und abhängig von der Geometrie der weiteren Elemente der Beschattungseinrichtung zusätzliche Planenbereiche hinzugefügt werden, welche beispielsweise den stets auf einer Welle aufgerollten Abschnitt der Beschattungsplane 140 oder einen Abschnitt zur Befestigung an der Profilschiene 4 bilden.

Die weiteren Elemente der Beschattungseinrichtung werden direkt an den zu Beginn des Verfahrens bereits definitiv angebrachten Befestigungskonsolen 110.1...110.4 befestigt.

Im Rahmen des erfindungsgemässen Verfahrens ist es möglich, die Befestigungskonsolen mit verstellbaren Ausgleichselementen zu versehen, welche eine genaue Justierung der späteren Befestigungspositionen für die Beschattungseinrichtung ermöglichen. Beispielsweise kann mit solchen Ausgleichselementen erreicht werden, dass Befestigungspositionen an zwei voneinander distanzierten Konsolen sowie die entsprechenden Orientierungen genau auf einer Linie liegen. Diese Justierung kann insbesondere mit Hilfe der dargestellten Lehren erfolgen. Nach erfolgter Justierung werden die Ausgleichselemente in ihrer Position fixiert, beispielsweise mittels einer Schraub-, Schweiss- oder Nietverbindung. Diese Position behalten sie auch für die Befestigung des Beschattungssystems bei.

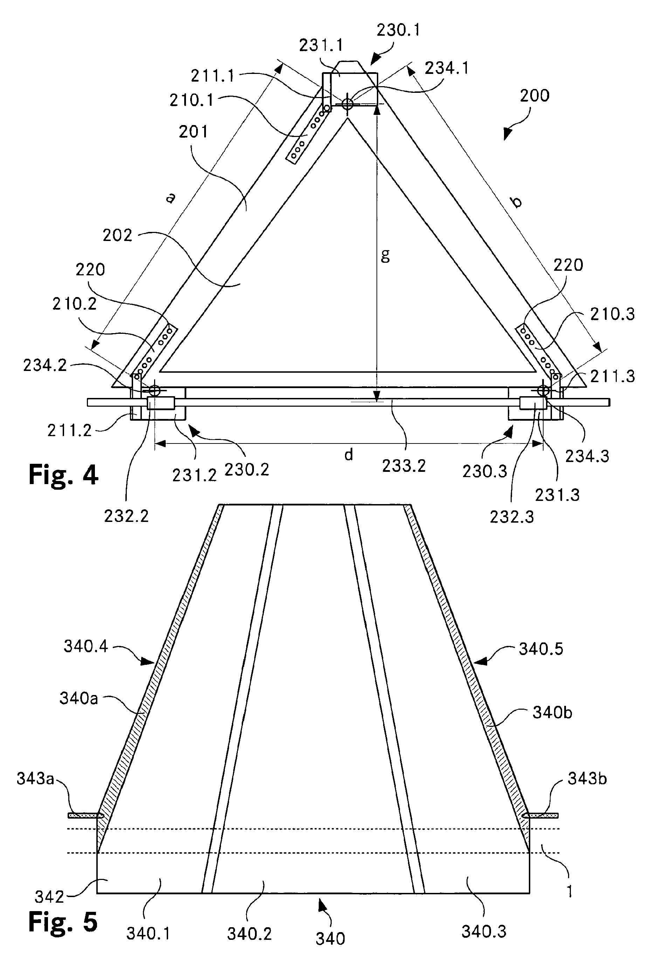

Die Figur 4 zeigt ein weiteres Flächenelement 200 eines Wintergartens mit einer gleichschenklig dreieckigen Grundfläche. Auch dieses Flächenelement umfasst einen Rahmen 201 aus Aluminiumprofilen sowie eine im Rahmen 201 aufgenommene Glasfüllung 202. Wiederum werden im Rahmen des erfindungsgemässen Verfahrens als erstes im Rahmen 201 eine Reihe von Befestigungskonsolen 210.1...210.3 in Bohrungen 220 befestigt.

Die Befestigungskonsolen 210.1...210.3 umfassen jeweils einen schwenkbaren Teil 211.1...211.3. Dieser ist an einem Längsende der Konsole um eine Achse schwenkbar angebracht, wobei die Achse bei am Rahmen 201 angebrachter Befestigungskonsole 210.1...110.3 senkrecht zur Oberfläche des Rahmens 201 steht. Die Befestigungskonsolen 210.1...210.3 werden in den drei Eckbereichen des Flächenelements 100 derart angebracht, dass die schwenkbaren Teile 211.1...211.3 ungefähr zu den Ecken des Flächenelements 200 weisen.

An diesen Befestigungskonsolen 210.1...210.3, genauer gesagt an den schwenkbaren Teilen 211.1...211.3, werden nun Lehren 230.1...230.3 temporär befestigt. Diese umfassen eine Grundplatte 231.1...231.3, zwei der Lehren auch eine Aufnahme 232.2, 232.3, in welche eine Stange 233.2 mit rundem Querschnitt einschiebbar ist. Mit Hilfe der Stange 233.2 kann sichergestellt werden dass die beiden Lehren 230.2, 230.3 parallel zueinander und auf einer Linie positioniert sind.

Auf der Grundplatte 231.1...231.3 jeder Lehre 230.1...230.3 ist ein Messpunkt 234.1...234.3 ausgebildet; dieser ist optisch gut sichtbar und gleichzeitig als Einsteckvorrichtung für einen an einem Massband angebrachten Zapfen ausgebildet.

Es werden nun mit Hilfe des genannten Massbands die Abstände a, b, d zwischen jeweils zwei Messpunkten sowie der Abstand g zwischen dem oberen Messpunkt 234.1 und der Mitte der gegenüberliegenden Stange 233.2 ausgemessen. Auch hier ist die Geometrie des Dreiecks durch die gemessenen Distanzen a, b, d, g überbestimmt, auch dann, wenn an die Geometrie des durch die Messpunkte 234.1...234.3 aufgespannten Dreiecks keine Bedingungen gestellt werden. Ein Vergleich der gemessenen Distanzen ermöglicht somit wiederum eine Kontrolle auf Mess-, Ablese- oder Übertragungsfehler. Mit Hilfe der gemessenen Abstände können die Dimensionen für die Herstellung und/oder Anpassung der Beschattungsplane und gegebenenfalls der mechanischen Befestigungsteile für die Beschattungseinrichtung bestimmt werden. Die entsprechend gefertigten weiteren Elemente der Beschattungseinrichtung werden direkt an den zu Beginn des Verfahrens bereits definitiv angebrachten Befestigungskonsolen 210.1... 210.3 befestigt.

Bei den dargestellten Flächenelementen, Befestigungsteilen, Lehren und Beschattungsplanen handelt es sich lediglich um Beispiele. Das erfindungsgemässe Verfahren ist für eine Vielzahl von andersartigen Flächenelementen geeignet. Es ist grundsätzlich möglich, ein einzelnes Flächenelement mit mehreren Beschattungsplanen zu versehen oder auch mehrere Flächenelemente mit derselben Beschattungsplane abzudecken. Bei der Ausbildung der Befestigungsteile und Lehren besteht ebenfalls eine grosse Freiheit, sie können der schliesslich zu befestigenden Beschattungseinrichtung innerhalb weiter Grenzen angepasst werden. Im Weiteren ist es möglich, die definitiven Befestigungspunkte erst zu einem späteren Zeitpunkt zu erstellen und die Lehren zunächst provisorisch am Flächenelement anzubringen, sie z. B. festzuklemmen.

Die Figur 5 zeigt eine Beschattungsplane 340 mit erfindungsgemässen Verstärkungen 341 a, 341b an den Längsseiten. Die Beschattungsplane 340 ist aus fünf Teilen 340.1...340.5 eines synthetischen Flächengewebes zusammengesetzt. Besonders geeignet ist ein Gewebe, welches unter dem Handelsnamen SOLTIS® von der Firma Ferrari, La-Tour-du-Pin (Frankreich) angeboten wird. Der Teil 340.2 ist trapezförmig, wobei die Kettfäden parallel zur Symmetrieachse verlaufen. Die Teile 340.1, 340.3 sind keilförmig und zueinander symmetrisch, die Kettfäden verlaufen ungefähr parallel zur äusseren Kante. Die drei Teile 340.1...340.3 sind in Randbereichen miteinander verschweisst und somit zu einer Plane zusammengesetzt, welche im Wesentlichen trapezförmig ist und an ihrem breiteren Ende eine rechteckige Verlängerung 342 aufweist.

Die weiteren Teile 340.4, 340.5 sind ebenfalls keilförmig und zueinander symmetrisch, die Kettfäden verlaufen im Wesentlichen in Längsrichtung. Diese Teile sind als Aufdoppelung mit der Unterseite der äussersten Bereiche der Teile 340.1, 340.3 verschweisst und bilden somit die Verstärkungen 341 a, 341 b. Die maximale Breite jeder Verstärkung ist ca. 55 mm und verhält sich zur Gesamtbreite der Beschattungsplane 340 ungefähr wie 1:20. Die Form der Verstärkungen 341 a, 341 b, die Länge der Verlängerung 342 und die Befestigung an einer Welle 1 sind derart gewählt, dass auch bei maximal ausgerollter Beschattungsplane 340 (gemäss Darstellung in der Figur 5) die Verstärkungen 341a, 341b auf der Welle 1 aufliegen.

Zusätzlich sind seitliche Stützelemente 343a, 343b vorhanden, welche die Beschattungsplane 340 im Bereich der Verstärkungen 341 a, 341 b zusätzlich von unten her stützen. Die Stützelemente 343a, 343b sind im Bereich des Übergangs zwischen der rechteckigen Verlängerung 342 und dem trapezförmigen Teil der Beschattungsplane 340 angeordnet. Ihre Höhe ist derart gewählt, dass der Kontaktpunkt mit der Beschattungsplane etwas höher liegt als die höchste Stützfläche der Welle 1. Die oberen Flächen der Stützelemente 343a, 343b, welche die Unterseite der Beschattungsplane 340 kontaktieren, sind mit Vorteil abgerundet, um eine sichere Führung der Beschattungsplane 340 zu erreichen und um Verletzungen des Planenmaterials zu vermeiden.

Die Verstärkungen 341 a, 341b und die Stützelemente 343a, 343b verhindern somit zuverlässig ein Durchhängen der Beschattungsplane 340 im Bereich der äusseren Längskanten.

Die Breite der Verstärkungen 341a, 341b kann abhängig von der Geometrie der Beschattungsplane 340 anders gewählt werden. Für eine einwandfreie Funktion ist es aber von Vorteil, wenn die Verstärkungen 341 a, 341 b jeweils auf einer Breite von mindestens 2 - 3 cm auf der Welle 1 aufliegen. Je nach Geometrie der Beschattungsplane und Ausbildung der Verstärkungen 341a, 341b können sich die Stützelemente 343a, 343b erübrigen. Bei gewissen Geometrien kann bereits durch das Anbringen der Stützelemente 343a, 343b allein, d. h. ohne die längsseitigen Verstärkungen 341a, 341b, eine verbesserte Führung der Beschattungsplane 340 erreicht werden.

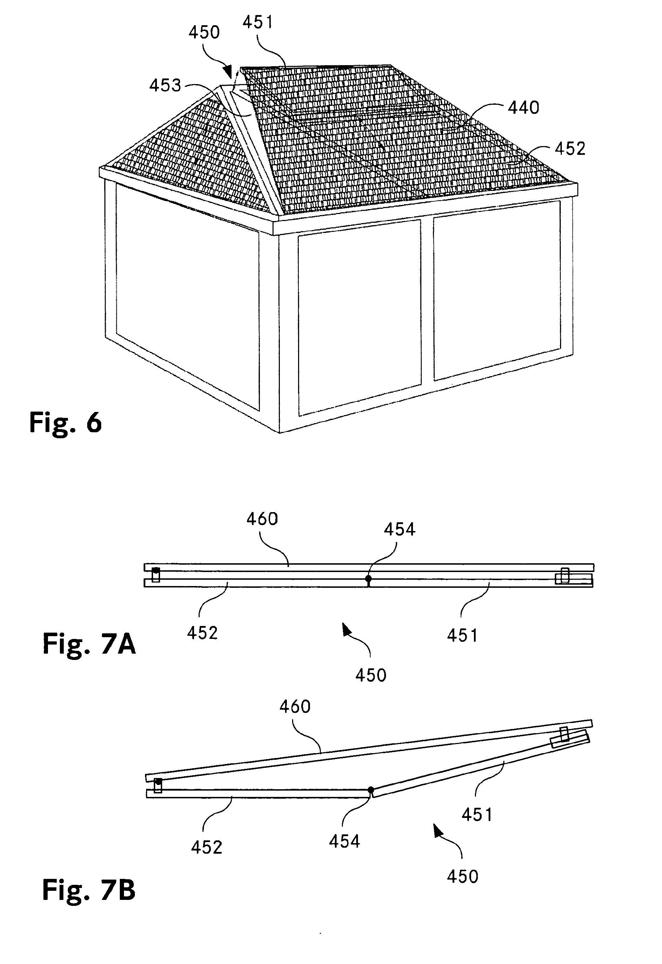

Die Figur 6 ist eine schematische Schrägansicht eines Gebäudes mit einem schwenkbaren Dachelement und einer erfindungsgemäss angebrachten Beschattungseinrichtung. Die Beschattungseinrichtung ist aufgebaut wie weiter oben im Zusammenhang mit der Figur 1 beschrieben, sie umfasst insbesondere eine zwischen der Wickelrolle und der Welle angeordnete Spannfeder. Das schwenkbare Dachelement 451 ist im oberen Bereich einer Dachfläche 450 angeordnet und bildet nur einen Teil dieser Dachfläche 450. Der untere Teil 452 sowie ein seitlicher Teil 453 der Dachfläche 450 sind unbeweglich. Das Dachelement 451 ist um eine im Wesentlichen horizontal orientierte Schwenkachse derart schwenkbar, dass sein oberes freies Ende nach aussen aufgeschwenkt werden kann.

An diesem freien Ende ist im dargestellten Ausführungsbeispiel die zweite Profilschiene 9 (siehe Figur 1) befestigt, während die Welle 1, auf welche die Beschattungsplane 440 aufrollbar ist, am unteren Ende der Dachfläche 450, am unteren, festen Teil 452 angebracht ist. Die Fläche der Beschattungsplane 440 entspricht der Dachfläche 450; in ausgerolltem Zustand überdeckt sie somit sowohl das schwenkbare Dachelement 451 als auch die weiteren Dachelemente 452, 453. Wird das schwenkbare Dachelement geöffnet, verringert sich der Abstand zwischen der Welle 1 und der Profilschiene 9; die Spannfeder zwischen der zur Welle 1 koaxialen Wickelrolle und der Welle stellt aber sicher, dass die Beschattungsplane 440 weiterhin gespannt ist.

Durch die Federkraft wird zudem der Öffnungsvorgang der schwenkbaren Dachfläche 451 unterstützt, durch eine geeignete Dimensionierung der Feder kann erreicht werden, dass die Gewichtskraft der schwenkbaren Dachfläche 451 teilweise durch die Federkraft kompensiert wird, so dass sowohl zum Öffnen als auch zum Schliessen der schwenkbaren Dachfläche 451 ähnlich geringe Kräfte bzw. Gegenkräfte notwendig sind.

Dieselbe Anordnung und Konstruktion eignet sich auch für Dach- oder Wandflächen von Wintergärten. Die Anordnung der Welle und der zweiten Profilschiene kann vertauscht werden, d. h. die Welle wird am schwenkbaren Element befestigt, während die Profilschiene am festen Dachteil angeordnet wird.

Die Figuren 7A, 7B zeigen eine schematische Seitenansicht eines schwenkbaren Dachelements mit einer weiteren Ausführungsform einer erfindungsgemässen Beschattungseinrichtung. Die Figur 7A zeigt die Ansicht bei geschlossenem Dachelement, die Figur 7B bei geöffnetem, d. h. hochgeschwenkten Dachelement.

Wiederum ist das schwenkbare Dachelement 451 im oberen Bereich einer Dachfläche 450 angeordnet und bildet nur einen Teil dieser Dachfläche 450. Der untere Teil 452 der Dachfläche 450 ist unbeweglich. Das Dachelement 451 ist um eine im Wesentlichen horizontal orientierte Schwenkachse 454 derart schwenkbar, dass sein oberes freies Ende nach aussen aufgeschwenkt werden kann. Ein Rahmen 460 ist im Bereich seines einen Längsendes am unteren Teil 452 der Dachfläche 450 schwenkbar befestigt. Am schwenkbaren Dachelement 451 ist der Rahmen 460 im Bereich seines gegenüberliegenden Längsendes schwenkbar und in Längsrichtung verschiebbar befestigt. Am Rahmen 460 sind die zweite Profilschiene 9 sowie die Welle 1 der Beschattungseinrichtung (gemäss Figur 1) in einem festen Abstand zueinander befestigt (in den Figuren 3A, 3B nicht dargestellt). Dabei kann sowohl die Welle 1 als auch die Profilschiene 9 im Bereich des oberen oder des unteren Dachelements 451, 452 angeordnet sein.

Wird das schwenkbare Dachelement 451 hochgeschwenkt, folgen der Rahmen 460 und somit die Beschattungseinrichtung dieser Schwenkbewegung, d. h. ein Verschwenken des Dachelements 451 hat auch eine Schwenkbewegung der Hauptebene der Beschattungseinrichtung zur Folge. Die Distanzänderung zwischen den Befestigungspunkten des Rahmens 460 wird durch die in Längsrichtung (d. h. Aufrollrichtung) bewegliche Lagerung kompensiert.

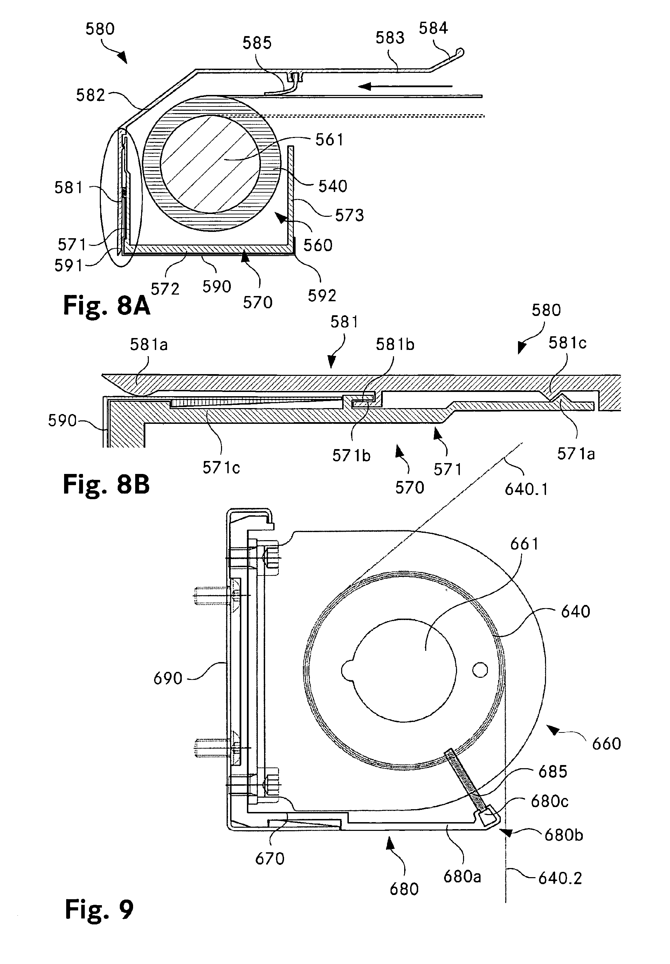

Die Figur 8A zeigt eine erste Ausführungsform einer Aufrolleinrichtung 560 einer erfindungsgemässen Beschattungseinrichtung, welche in einem Halteprofil 570 aufgenommen ist, sowie ein am Halteprofil 570 mit einer erfindungsgemässen Verbindungsanordnung befestigtes Abdeckgehäuse 580. Die Figur 8B zeigt den in der Figur 8A durch eine Ellipse markierten Ausschnitt im Detail. Die Aufrolleinrichtung 560 umfasst eine Welle 561, auf welche eine Beschattungsplane 540 aufgewickelt ist. Die Aufrolleinrichtung 560 ist auf an sich bekannte Weise im Halteprofil 570 aus Aluminium aufgenommen und an diesem befestigt. Das Halteprofil 570 ist im Wesentlichen U-förmig. An einem der Schenkel 571 des Halteprofils 570 ist das Abdeckgehäuse 580 aus Aluminium im Bereich eines ersten Abschnitts 581 mittels einer lösbaren Klemmverbindung befestigt. Diese Verbindung wird weiter unten im Detail beschrieben. Das Abdeckgehäuse 580 erstreckt sich vom freien Ende des Schenkels 571 des Halteprofils 570 mit einem zweiten Abschnitt 582 zunächst unter einem Winkel von ca. 40° schräg nach vorn, in Richtung des Halteprofils 570, anschliessend in einem dritten Abschnitt 583 parallel zur Basis 572 des U-förmigen Halteprofils 570. Am freien Ende des Abdeckgehäuses 580 ist ein nach aussen umgebogener Abschnitt 584 vorhanden.

Zwischen dem dritten Abschnitt 583 des Abdeckgehäuses und dem zweiten Schenkel 573 des Halteprofils 570 ist eine Durchgangsöffnung für die Beschattungsplane 540 gebildet. Im Bereich dieser Durchgangsöffnung ist auf der Innenseite des Abdeckgehäuses 580 eine Bürste 585 befestigt. Deren Länge ist so bemessen, dass sie sowohl in vollständig aufgerolltem als auch in abgerolltem Zustand der Beschattungsplane 540 deren ihr zugewandte Oberfläche kontaktiert und beim Einrollen der Beschattungsplane 540 festen Schmutz zurückhält.

Die Verbindungsanordnung ist in der Figur 7B im Detail dargestellt. Der Schenkel 571 des Halteprofils 570 erstreckt sich ausgehend von der Basis 572 zunächst in gerader Richtung senkrecht zur Basis 572. Nach ungefähr zwei Dritteln seiner Länge schliesst sich ein vorderer Abschnitt des Schenkels 571 an, welcher einen geringeren Querschnitt aufweist und etwas nach aussen versetzt ist.

Auf der Aussenseite dieses Abschnitts, in der Nähe des freien Endes des Schenkels 571 ist eine Erhebung 571a mit im Wesentlichen gleichschenklig-dreieckigem Querschnitt ausgebildet. Hinter dem Übergang zum vorderen Abschnitt ist ein Kanal 571 b ausgebildet, welcher eine Nut mit einer dem freien Ende des Schenkels 571 zugewandten Öffnung senkrecht zur Aussenfläche des Halteprofils 570 bildet. Der Kanal 571 b wird durch einen Boden gebildet, der sich senkrecht von der Aussenfläche nach aussen erstreckt sowie durch eine Wand, welche sich senkrecht zum Boden und parallel zur Aussenfläche nach vorne, in Richtung des freien Endes des Schenkels 571 erstreckt.

Nahe dem Übergang zur Basis 572 des Halteprofils 570 tritt der Schenkel 571 etwas nach aussen hervor, so dass zwischen diesem Teil und dem Kanal 571b eine Vertiefung 571c gebildet ist. Auf dem Halteprofil 570 ist ein Federelement 590 aus Stahl mit einer Schnappverbindung befestigt. Die Breite des Federelements 590 ist deutlich geringer als die Gesamtbreite des Halteprofils 570 und des Abdeckgehäuses 580; die Gesamtbreite beträgt beispielsweise 2.5 m, während ein Federelement nur gerade 3 cm breit ist. Entlang der Gesamtbreite des Halteprofils 570 und des Abdeckgehäuses 580 sind zwei bis drei Federelemente 590 angeordnet. Die Federelemente 590 haben primär den Zweck, den Querschnitt des Halteprofils 570 im Bereich des Übergangs des Schenkels 571 zur Basis 572 nach aussen zu vergrössern.

Der Abschnitt 581, mittels welchem das Abdeckgehäuse 580 am Halteprofil 570 befestigt ist, weist an seinem freien Ende eine nach innen weisende Verdickung 581 a auf. Ungefähr in seiner Mitte ist auf der Innenseite ein Kanal 581 b ausgebildet. Dieser wird durch einen Boden gebildet, der sich senkrecht von der Innenfläche nach innen erstreckt sowie durch eine Wand, welche sich senkrecht zum Boden und parallel zur Innenfläche nach hinten, in Richtung des freien Endes des Abschnitts 581 erstreckt. Diese von der Oberfläche des Abschnitts 581 distanzierte Wand bildet eine Feder, deren freies Ende dem freien Ende des Abschnitts 581 zugewandt ist. Die Dimensionen des Kanals 581b entsprechen den Dimensionen des Kanals 571 b am Halteprofil 570.

Nahe beim Übergang zum schräg verlaufenden weiteren Abschnitt 582 ist auf der Innenseite zudem eine Erhebung 581c mit im Wesentlichen gleichschenklig-dreieckigem Querschnitt ausgebildet. Ihre Dimensionen entsprechen denjenigen der Erhebung 571a am Halteprofil.

Sämtliche Erhebungen, Kanäle und Verdickungen am Halteprofil 570 sowie am Abdeckgehäuse 580 erstrecken sich der gesamten Breite des entsprechenden Bauteils entlang.

Zum Befestigen des Abdeckgehäuses 580 am Halteprofil 570 kann ersteres in einer Richtung parallel zu seinem Abschnitt 581 auf den Schenkel 571 des Halteprofils 570 aufgeschoben werden. Dabei muss eine gewisse Schiebekraft aufgebracht werden, um den Schenkel 571 bzw. den Abschnitt 581 geringfügig zu verformen. Die Erhebung 581c des Abdeckgehäuses 580 wird über die Erhebung 571a des Halteprofils 570 geschoben, die Feder des Kanals 581b wird in die Nut des Kanals 571b eingeführt. Bei denjenigen Bereichen des Halteprofils 570, welche mit einem Federelement 590 versehen sind, wird der mit der Verdickung 581 a versehene Bereich des Abschnitts 581 elastisch leicht nach aussen gedrückt, so dass eine rückwirkende Federkraft aufgebaut wird. Durch diese Federkraft werden die beiden Bauteile fest aneinander gehalten. Bewegungen entlang und senkrecht zu den Flächen werden durch die Erhebungen 571 a, 581 c und die Kanäle 571 b, 581 b verhindert.

Zum Lösen der Verbindung kann ein längliches Werkzeug wie z. B. ein Schraubenzieher, von der zwischen dem äusseren Schenkel 573 des Halteprofils 570 und dem Abdeckgehäuse 580 mit seinem vorderen Ende in den Innenraum der Aufrolleinrichtung 560 eingeführt und auf der aufgewickelten Beschattungsplane 540 abgestützt werden. Das freie Ende des Werkzeugs wird zwischen die parallelen Abschnitte 571, 581 eingeführt. Mittels der entsprechenden Hebelwirkung kann auf das Abdeckgehäuse 580 eine ausreichende Kraft in Öffnungsrichtung parallel zu den Abschnitten 571, 581 erzeugt werden. Nach Überwinden der rückwirkenden Federkraft zwischen der Verdickung 581a und den Federelementen 590 kann das Abdeckgehäuse 580 leicht vom Halteprofil 570 entfernt werden.

Die Federelemente 590 können in vorteilhafter Weise auch zum Befestigen des Halteprofils 570 an einem Träger, z. B. einem Element eines Wintergartens, eingesetzt werden. Zu diesem Zweck können ihre rückseitigen Hauptflächen mit durchgehenden Öffnungen versehen sein, in welchen Befestigungsmittel wie z. B. Schrauben aufgenommen werden können. Die benötigte Anzahl Federelemente 590 kann somit zunächst auf einfache Weise am Träger befestigt werden, wobei deren genaue Längsposition unkritisch ist. Anschliessend kann das Halteprofil auf einfache Weise zwischen die seitlichen Schenkel 591, 592 der am Träger befestigten Federelemente 590 eingeschnappt werden.

Die Figur 9 zeigt eine zweite Ausführungsform einer Aufrolleinrichtung einer erfindungsgemässen Beschattungseinrichtung. Die Aufrolleinrichtung 660 umfasst eine Welle 661, auf welche eine Beschattungsplane 640 aufgewickelt ist. Sie ist auf an sich bekannte Weise in einem Halteprofil 670 aus Aluminium aufgenommen und an diesem befestigt. Das Halteprofil 670 seinerseits ist mit einem Federelement 690, wie oben im Zusammenhang mit den Figuren 8A, 8B beschrieben, an einem Tragelement (nicht dargestellt) befestigt.

Weiter am Halteprofil 670 befestigt ist ein Gehäuse 680, welches die Welle 661 teilweise umschliesst. Während das Halteprofil 670 im Wesentlichen senkrecht orientiert ist, ragt das an ihm befestigte Gehäuse 680 auf der Unterseite mit einem horizontalen Gehäuseabschnitt 680a unter dem Halteprofil 670 hervor. Dieser Gehäuseabschnitt 680a erstreckt sich annähernd soweit nach vorne wie die darüber angeordnete Welle 661 inklusive der darauf aufgerollten Beschattungsplane 640.

Am vorderen, freien Ende 680b des unteren Gehäuseabschnitts 680a ist in einer Aufnahmenut 680c eine Bürste 685 befestigt. Das freie Ende der Bürste 685 ragt schräg nach oben, ungefähr radial, in Richtung der Drehachse der Welle 661 und kontaktiert die auf der Welle 661 aufgerollte Beschattungsplane 640.

Das dargestellte Gehäuse ermöglicht ein Herausführen der Beschattungsplane 640 in einem weiten Winkelbereich von 180°, nämlich senkrecht nach oben, in beliebigen Richtungen schräg nach vorne oder senkrecht nach unten. In der Figur 9 sind als Beispiele eine schräg nach vorne oben geführte Beschattungsplane 640.1, z. B. für eine schräge Dachfläche, und eine senkrecht nach unten geführte Beschattungsplane 640.2, z. B. für eine senkrechte Wandfläche, dargestellt. Unabhängig von der Richtung, in welcher die Beschattungsplane 640 hinausgeführt ist, wird deren oben- bzw. aussenliegende Oberfläche beim Aufrollen durch die Bürste 685 von festen Schmutzpartikeln befreit, bevor die nächste Lage auf diese Oberfläche aufgerollt wird. Die entfernten Schmutzpartikel bewegen sich infolge der Schwerkraft nach unten und werden auf dem unteren Gehäuseabschnitt 680a gesammelt. Der von der Planenoberfläche entfernte Schmutz gelangt also bei einer innenseitig angeordneten Beschattungsplane nicht auf den Boden im Gehäuseinnern bzw. bei einer aussenseitig angeordneten Plane nicht auf eine zu beschattende Dach- oder Wandfläche.

Zusammenfassend ist festzustellen, dass durch die Erfindung eine Beschattungseinrichtung sowie ein Verfahren zum Herstellen und Anbringen einer solchen Beschattungseinrichtung geschaffen werden, welche verschiedene Nachteile des Standes der Technik vermeiden.

## Patentansprüche

1. Verfahren zum Herstellen und Anbringen einer Beschattungseinrichtung an einem lichtdurchlässigen Flächenelement (100; 200), umfassend folgende Schritte:
a) Anbringen eines ersten Bauelements (130.1...130.4; 230.1...230.3) am Flächenelement (100; 200), wobei das erste Bauelement (130.1...130.4; 230.1...230.3) mindestens einen ersten Messpunkt (134.1...134.4; 234.1...234.3) definiert;
b) Anbringen eines zweiten Bauelements (130.1...130.4; 230.1...230.3) am Flächenelement (100; 200), wobei das zweite Bauelement (130.1...130.4; 230.1...230.3) mindestens einen zweiten Messpunkt (134.1...134.4; 234.1...234.3) definiert;
c) Ausmessen von Distanzen (a...f) zwischen dem mindestens einen ersten Messpunkt und dem mindestens einen zweiten Messpunkt (134.1...134.4; 234.1...234.3);
d) Herstellen einer Beschattungsplane (140) und gegebenenfalls mechanischer Elemente der Beschattungseinrichtung in Abhängigkeit von den ausgemessenen Distanzen (a...f); und
e) Anbringen der Beschattungseinrichtung am Flächenelement (100; 200).

2. Verfahren nach Anspruch 1, **dadurch gekennzeichnet, dass** vor dem Schritt a) am Flächenelement (100; 200) Befestigungspunkte (120; 220) zum Anbringen der Beschattungseinrichtung definitiv erstellt werden, dass in den Schritten a) und b) die Bauelemente an den definitiven Befestigungspunkten (120; 220) angebracht werden und dass im Schritt e) die Beschattungseinrichtung an den definitiven Befestigungspunkten (120; 220) angebracht wird.

3. Verfahren nach Anspruch 1 oder 2, **dadurch gekennzeichnet, dass** das erste und/oder das zweite Bauelement eine Lehre (130.1...130.4; 230.1...230.3) ist, wobei der mindestens eine erste und/oder zweite Messpunkt (134.1 ... 134.4; 234.1...234.3) an dieser Lehre (130.1...130.4; 230.1...230.3) ausgebildet ist.

4. Verfahren nach einem der Ansprüche 1 bis 3, **dadurch gekennzeichnet, dass** das erste und/oder das zweite Bauelement eine Befestigungskonsole der Beschattungseinrichtung ist, wobei der mindestens eine erste und/oder zweite Messpunkt an dieser Befestigungskonsole ausgebildet ist.

5. Verfahren nach einem der Ansprüche 1 bis 4, **dadurch gekennzeichnet, dass** das erste und/oder das zweite Bauelement eine Befestigungskonsole (110.1...110.4; 210.1...210.4) der Beschattungseinrichtung ist, an welcher eine Lehre (130.1...130.4; 230.1...230.3) befestigt ist, wobei der mindestens eine erste und/oder zweite Messpunkt (134.1...134.4; 234.1...234.3) an dieser Lehre (130.1...130.4; 230.1...230.3) ausgebildet ist.

6. Verfahren nach Anspruch 3 oder 5, **dadurch gekennzeichnet, dass** die Lehre (130.1... 130.4; 230.2, 230.3) eine gerade Stange (133.1, 133.2; 233.2) umfasst, welche zur Anbringung am Flächenelement (100; 200) entlang ihrer Längsausdehnung an zwei voneinander distanzierten Befestigungspunkten (120; 220) befestigt wird.

7. Verfahren nach einem der Ansprüche 1 bis 6, **dadurch gekennzeichnet, dass** mindestens eine zusätzliche Distanz (a...f) zwischen den Messpunkten (134.1...134.4; 234.1...234.3) ausgemessen wird, welche eine Geometrie der herzustellenden Beschattungsplanen (140) und/oder mechanischen Elemente überbestimmt, und dass mittels der zusätzlichen Distanz eine Kontrolle auf Fehler der Ausmessung vorgenommen wird.

8. Hilfsmittelsatz für die Herstellung und Anbringung einer Beschattungseinrichtung an einem lichtdurchlässigen Flächenelement (100; 200), umfassend mindestens zwei Bauelemente (110.1...110.4, 130.1...130.4; 210.1...210.4, 230.1...230.3) zur Anbringung am Flächenelement, wobei die Bauelemente (110.1...110.4, 130.1...130.4; 210.1...210.4, 230.1...230.3) mindestens je einen Messpunkt (134.1...134.4; 234.1...234.3) für eine Dimensionierung einer Beschattungsplane (140) und gegebenenfalls mechanischer Elemente der Beschattungseinrichtung definieren.

9. Flexible, aufrollbare Beschattungsplane (340) zum Beschatten eines lichtdurchlässigen Flächenelements, wobei die Beschattungsplane (340) entlang einer Aufrollrichtung eine wechselnde Breite aufweist, insbesondere trapez- oder dreieckförmig ist, **dadurch gekennzeichnet, dass** die Beschattungsplane (340) im Bereich mindestens einer Längsseite mit einer flächigen Verstärkung (341 a, 341 b) versehen ist.

10. Beschattungsplane nach Anspruch 9, **dadurch gekennzeichnet, dass** die flächige Verstärkung (341 a, 341 b) durch eine Aufdoppelung gebildet ist.

11. Beschattungsplane nach Anspruch 9 oder 10, **dadurch gekennzeichnet, dass** die Breite der Beschattungsplane (340) in Aufrollrichtung zunimmt und dass die flächige Verstärkung (341 a, 341b) keilförmig ist, wobei eine Breite der Verstärkung (341 a, 341 b) in Aufrollrichtung zunimmt.

12. Beschattungseinrichtung mit einer Beschattungsplane (340) nach einem der Ansprüche 9 bis 11 und einer Welle (1), auf welche die Beschattungsplane (340) aufwickelbar ist, wobei die Beschattungsplane (340) derart ausgebildet ist, dass ein Bereich der flächigen Verstärkung (341 a, 341b) auch bei maximal abgewickelter Beschattungsplane (340) an der Welle (1) anliegt.

13. Beschattungseinrichtung, insbesondere nach Anspruch 12, mit einer Beschattungsplane (340) und einer Welle (1), auf welche die Beschattungsplane (340) aufwickelbar ist, **gekennzeichnet durch** ein distanziert vor der Welle (1) angeordnetes Stützelement (343a, 343b) zum lokalen Unterstützen der Beschattungsplane (340) in einem Bereich ihrer Längskante.

14. Verfahren zum Anbringen einer Beschattungseinrichtung an einem um eine Schwenkachse schwenkbaren, lichtdurchlässigen Flächenelement (451), insbesondere eines Wintergartens, mit einer der Schwenkachse gegenüberliegenden freien Seite, wobei die Beschattungseinrichtung eine Beschattungsplane (2, 440) umfasst, eine Welle (1), auf welche die Beschattungsplane (2, 440) aufwickelbar ist, sowie ein an einem der Welle (1) gegenüberliegenden Ende der Beschattungseinrichtung angeordnetes Gegenstück (9, 10) zum Spannen der Beschattungsplane (440), **dadurch gekennzeichnet, dass** die Welle (1) oder das Gegenstück an der freien Seite des schwenkbaren Flächenelements (451) befestigt wird.

15. Verfahren nach Anspruch 14, **dadurch gekennzeichnet, dass** die Beschattungseinrichtung ein seilartiges Zugelement (23) umfasst, durch welches die Beschattungsplane (2, 440) spannbar ist, und dass das Gegenstück durch eine Umlenkung (9, 10) für das Zugelement (23) gebildet wird, wobei zwischen der Welle (1) und dem Zugelement (23) ein Spannmechanismus ausgebildet ist, durch welchen eine Spannung der Beschattungsplane (2, 440) auch bei Abstandsänderungen zwischen der Welle (1) und der Umlenkung (9, 10) aufrecht erhalten wird.

16. Verfahren nach Anspruch 15, **dadurch gekennzeichnet, dass** entsprechend die Umlenkung (9, 10) oder die Welle (1) an einem weiteren Element (452) einer das schwenkbare, lichtdurchlässige Flächenelement (451) umfassenden Fläche (450) befestigt wird, wobei als weiteres Element insbesondere ein unbewegliches Element (452) der Fläche (450) gewählt wird.

17. Anordnung umfassend
a) eine Dach- oder Wandfläche (450) mit einem um eine Schwenkachse schwenkbaren, lichtdurchlässigen Flächenelement (451) mit einer der Schwenkachse gegenüberliegenden freien Seite; und
b) eine Beschattungseinrichtung mit einer Beschattungsplane (440), einer Welle (1), auf welche die Beschattungsplane (2, 440) aufwickelbar ist, sowie einem an einem der Welle (1) gegenüberliegenden Ende der Beschattungseinrichtung angeordneten Gegenstück (9, 10);
**dadurch gekennzeichnet, dass**
c) die Welle (1) oder das Gegenstück (9, 10) an der freien Seite des schwenkbaren Flächenelements (451) befestigt ist.

18. Anordnung nach Anspruch 17, **dadurch gekennzeichnet, dass** die Beschattungseinrichtung ein seilartiges Zugelement (23) umfasst, durch welches die Beschattungsplane (2, 440) spannbar ist, und dass das Gegenstück durch eine Umlenkung (9, 10) für das Zugelement (23) gebildet wird, wobei zwischen der Welle (1) und dem Zugelement (23) ein Spannmechanismus ausgebildet ist, durch welchen eine Spannung der Beschattungsplane (2, 440) auch bei Abstandsänderungen zwischen der Welle (1) und der Umlenkung (9, 10) aufrecht erhalten wird.

19. Anordnung nach Anspruch 17 oder 18, **dadurch gekennzeichnet, dass** die Welle und das Gegenstück an Befestigungspunkten an einem Rahmen (460) befestigt sind, wobei die Befestigungspunkte einen vorgegebenen festen Abstand aufweisen, wobei eine erste Seite des Rahmens (460) an der freien Seite des schwenkbaren Flächenelements (451) befestigt ist und wobei die erste Seite und/oder eine der ersten Seite gegenüberliegende zweite Seite des Rahmens (460) in einer Richtung senkrecht zur Schwenkachse beweglich gelagert ist.

20. Verbindungsanordnung zum Verbinden eines ersten Bauteils (570) mit einem zweiten Bauteil (580), insbesondere eines Halteprofils (570) mit einem Abdeckgehäuse (580) für eine Aufrolleinrichtung einer Beschattungseinrichtung, wobei in einem Verbindungsbereich Hauptflächen (571, 581) des ersten Bauteils (570) und des zweiten Bauteils (580) zueinander parallel sind, **dadurch gekennzeichnet, dass**
a) im ersten Bauteil (570) im Verbindungsbereich (571) eine Nut (571b) ausgebildet ist, wobei eine Öffnungsebene der Nut (571 b) im Wesentlichen senkrecht steht zur Hauptfläche (571) des ersten Bauteils (570);
b) im zweiten Bauteil (580) im Verbindungsbereich (581) eine Feder (581b) derart ausgebildet ist, dass bei parallelen Hauptflächen (571, 581) des ersten Bauteils (570) und des zweiten Bauteils (580) die Feder (581 b) in einer Einführrichtung parallel zu den Hauptflächen (571, 581) in die Nut (571 b) einführbar ist;
c) im ersten Bauteil (570) im Verbindungsbereich (571) eine erste Erhebung (571 a) ausgebildet ist;
d) im zweiten Bauteil (580) im Verbindungsbereich (581) eine zweite Erhebung (581 c) ausgebildet ist, wobei die Erhebungen (571 a, 581 c) parallel zur Nut (571 b) bzw. zur Feder (581 b) verlaufen und wobei die Erhebungen (571a, 581c) derart angeordnet sind, dass beim Einführen der Feder (581 b) in die Nut (571 b) die zweite Erhebung (581 c) über die erste Erhebung (571 a) bewegt wird; und dass
e) das erste Bauteil (570) und das zweite Bauteil (580) im Verbindungsbereich (571, 581) derart ausgebildet sind, dass bei in die Nut (571 b) eingeführter Feder (581 b) Klemmabschnitte (581 a, 590) der beiden Bauteile (570, 580) gegeneinander verspannt sind, wobei die Klemmabschnitte (581a, 590) parallel sind zur Nut (571b) bzw. Feder (581b) und den Erhebungen (571 a, 581c) bezüglich der Nut (571 b) bzw. der Feder (581 b) gegenüberliegen.

21. Verbindungsanordnung nach Anspruch 20, **dadurch gekennzeichnet, dass** die Bauteile (570, 580) eine längliche Form haben, dass sich die Nut (571 b), die Feder (581 b), die Erhebungen (571 a, 581c) sowie die Klemmabschnitte (581 a, 590) in Längsrichtung erstrecken und dass die Klemmabschnitte (581 a, 590) durch in Längsrichtung voneinander distanzierte Bereiche (590) eines der Bauteile gebildet werden.

22. Verbindungsanordnung nach Anspruch 21, **dadurch gekennzeichnet, dass** die Klemmabschnitte durch Federelemente (590) gebildet sind, welche mittels einer Schnappverbindung an einem der Bauteile (570) befestigbar sind.

23. Verbindungsanordnung nach Anspruch 22, **dadurch gekennzeichnet, dass** das erste Bauteil (570) ein Befestigungsprofil aus Aluminium zur Aufnahme einer Welle (561) einer Beschattungseinrichtung ist, dass das zweite Bauteil (580) ein Abdeckkasten aus Aluminium für die Welle (561) der Beschattungseinrichtung ist und dass die Federelemente (590) aus Stahl hergestellt sind.

24. Aufrolleinrichtung (560; 660) für eine Beschattungseinrichtung, insbesondere für eine innenliegende Seite eines lichtdurchlässigen Flächenelements, mit einer Welle (561; 661), auf welche eine Beschattungsplane (540; 640) aufwickelbar ist, sowie mit einem Gehäuse (580; 680), in welchem die Welle (561; 661) aufgenommen ist, wobei das Gehäuse (580; 680) eine Öffnung zum Herausführen der Beschattungsplane (540; 640) aufweist, **dadurch gekennzeichnet, dass** im Gehäuse (580; 680) ein mechanisches Reinigungselement (585; 685), insbesondere eine Bürste, angeordnet ist, welche mindestens eine Oberfläche der Beschattungsplane (540; 640) kontaktiert und derart angeordnet ist, dass die Beschattungsplane (540; 640) beim Aufrollen auf die Welle (561; 661) gereinigt wird.

25. Aufrolleinrichtung nach Anspruch 24, **dadurch gekennzeichnet, dass** das Reinigungselement (685) derart angeordnet ist, dass von der Oberfläche der Beschattungsplane (640) entfernter Schmutz im Gehäuse (680) verbleibt.
